# FASCICULE DE BREVET EUROPEEN

(11) **EP 3 899 145 B1**
(45) Date de publication et mention de la délivrance du brevet: **29.01.2025**
(21) Numéro de dépôt: 19845703.8
(22) Date de dépôt: 16.12.2019
(51) Int. Cl.: E02D 3/00

(54) **PROCÉDÉ D'ASSISTANCE AU TRAITEMENT DE SOL**
VERFAHREN ZUR UNTERSTÜTZUNG BEI DER BEHANDLUNG EINES BODENS
METHOD OF SUPPORTING A SOIL TREATMENT PROCESS

(30) Priorité: 18.12.2018 FR 1873143
(43) Date de publication de la demande: 27.10.2021
(73) Titulaire: Soletanche Freyssinet, 92500 Rueil Malmaison (FR)
(72) Inventeur: QUANDALLE, Benoit, 92500 RUEIL MALMAISON (FR)
(74) Mandataire: Cabinet Beau de Loménie
(86) Numéro de dépôt international: PCT/FR2019/053086
(87) Numéro de publication internationale: WO 2020/128275

(56) Documents cités:
- EP-A2- 0 919 837
- WO-A1-2014/204308
- FR-A1- 3 047 311
- JP-A- 2003 119 784
- JP-A- 2010 230 482
- JP-A- H10 298 991
- US-A1- 2018 259 330

## Description

### Domaine Technique

La présente invention concerne le domaine du traitement de sol pour en améliorer les propriétés physiques. L'invention porte plus précisément sur un procédé d'assistance au traitement d'un sol.

Dans le cadre de travaux de traitement de sol, un opérateur de chantier est régulièrement amené à traiter une pluralité de portions de sol distinctes, présentant chacune des coordonnées géographiques considérées dans un référentiel global ou local. Ces portions de sol devant être traitées sont appelées zones de traitement.

### Technique antérieure

Le traitement d'une zone de traitement peut par exemple consister en un forage du sol ou encore en l'injection en profondeur d'un produit de traitement au niveau de ladite zone de traitement. Le traitement est réalisé à l'aide d'une machine comprenant un outil de traitement de sol destiné à être enfoncé dans le sol. Autrement dit, la zone de traitement à traiter peut s'étendre selon une certaine profondeur.

Il est connu de fournir à l'opérateur de chantier un plan d'implantation sur lequel sont identifiées les différentes zones de traitement. L'opérateur cherche alors à positionner sa machine et son outil de traitement de sol de manière à faire correspondre les coordonnées géographiques de l'outil de traitement de sol et celles de la zone de forages indiquées sur le plan d'implantation. L'opérateur ne dispose toutefois pas d'indicateur visuel sur le chantier lui permettant de positionner l'outil de traitement de sol. L'opérateur ne peut par conséquent pas réaliser le traitement du sol, uniquement à partir du plan d'implantation.

On connait également un procédé consistant à réaliser un marquage du sol du chantier, par exemple à la peinture, de manière à indiquer l'emplacement des zones de traitement à l'opérateur. Ce procédé a pour désavantage de nécessiter l'intervention d'un géomètre afin réaliser le marquage à partir des coordonnées géographiques des zones de traitement. Ce procédé est particulièrement long et coûteux. En outre, un tel marquage offre une précision finale, après réalisation du traitement des zones de traitement, de l'ordre de la dizaine de centimètres, ce qui est là-encore insuffisant. Par ailleurs, le marquage risque de s'effacer en cas de pluie ou de circulation sur le chantier. Pour remédier à ce dernier inconvénient, il est connu de matérialiser la zone de traitement par un piquet ou un drapeau. Ceci implique cependant des coûts supplémentaires. Il est connu de WO2014/204308A1 d'avoir recours à des coordonnées géographiques pour localiser un pieu pendant son introduction dans un sol. Il s'agit toutefois d'une opération bien distincte d'une opération de traitement de sol.

### Exposé de l'invention

Un but de la présente invention est de proposer un procédé d'assistance au traitement d'un sol remédiant aux problèmes précités. Pour ce faire, l'invention porte sur un procédé d'assistance au traitement d'un sol comprenant les étapes suivantes :
- on fournit une machine comprenant un outil de traitement de sol destiné à être introduit dans le sol ;
- on fournit des coordonnées géographiques d'au moins une zone de traitement associée à un traitement du sol à réaliser ;
- on fournit au moins un dispositif d'acquisition optique ;
- on détermine des données de positionnement de l'outil de traitement de sol à l'aide du dispositif d'acquisition optique ;
- on fournit un dispositif d'affichage;
- on affiche sur ledit dispositif d'affichage au moins un premier objet représentatif de l'outil de traitement de sol ou de ladite au moins une zone de traitement ; et
- on positionne sur le dispositif d'affichage ledit premier objet à l'aide des données de positionnement de l'outil de traitement de sol précédemment déterminées et des coordonnées géographiques de ladite zone de traitement.

La zone de traitement correspond à une portion du sol du chantier destinée à recevoir l'outil de traitement de sol. Elle s'étend de préférence selon un axe et est de préférence cylindrique. Le procédé selon l'invention permet de guider l'opérateur en lui permettant d'amener facilement et précisément l'outil de traitement de sol en regard et au-dessus de la zone de traitement.

Les données de positionnement de l'outil de traitement de sol et les coordonnées géographique de la zone de traitement sont de préférence exprimées dans un même référentiel. De manière non limitative, ce référentiel peut être un référentiel global, tel que le référentiel terrestre, ou un référentiel local, par exemple centré sur un élément du chantier tel qu'une balise.

Le dispositif d'acquisition optique peut comprendre un ou plusieurs appareils photos ou caméras ou un dispositif de télédétection laser (LIDAR) configurés pour acquérir des images de l'outil de traitement de sol. Il peut mettre en œuvre des techniques de traitement d'images ou de photogrammétrie afin de déterminer les données de positionnement de l'outil de traitement de sol. La détermination desdites données de positionnement peut par exemple être réalisée en comparant les différentes images obtenues par les appareils photos ou caméras.

En variante, le dispositif d'acquisition optique peut comprendre un laser et une mire réfléchissante disposée sur l'outil de traitement de sol. En pointant le laser sur la mire on détermine alors des données de positionnement de ladite mire et donc de l'outil de traitement de sol.

De manière avantageuse, on réalise l'acquisition des données de positionnement au pied de l'outil de traitement de sol. En outre, le dispositif d'acquisition optique est de préférence disposé à proximité dudit pied de l'outil de traitement de sol. La distance entre le dispositif d'acquisition optique et le pied de l'outil de traitement de sol est par exemple comprise entre 1 mètre et 5 mètres.

Contrairement aux procédés de l'art antérieur qui ne permettent pas un repérage précis de la position de l'outil de traitement, le procédé selon l'invention permet d'acquérir les données de positionnement en réalisant des mesures directement sur l'outil de traitement de sol. En effet, le dispositif d'acquisition optique permet d'acquérir l'environnement local en pied du mât. Le risque d'erreurs de mesure et d'imprécisions est fortement réduit. Aussi, la détermination des données de positionnement de l'outil de traitement de sol est facilitée et la précision des données de positionnement déterminées est améliorée.

Les données de positionnement de l'outil de traitement de sol sont de préférence déterminées et mises-à-jour en temps réel et directement transmises au dispositif d'affichage.

De manière non limitative, le dispositif d'acquisition optique peut être monté sur la machine ou sur un support indépendant de la machine, éventuellement mobile. Ce support peut être un véhicule autonome configuré pour se déplacer sur le chantier.

Le dispositif d'affichage comprend de préférence un écran, configuré pour afficher le premier objet et un module de contrôle vidéo communiquant avec l'écran pour positionner le premier objet sur l'écran. De manière non limitative, le dispositif d'affichage peut équiper un appareil tel qu'une tablette tactile, un ordiphone, un ordinateur portable ou encore une paire de lunettes de réalité augmentée. Aussi, le procédé selon l'invention est avantageusement mis en œuvre dans un tel appareil.

Les données de positionnement de l'outil de traitement de sol, déterminées par le dispositif d'acquisition optique, sont de préférence fournies au module de contrôle vidéo du dispositif d'affichage. Ces données de positionnement sont traitées par le dispositif de contrôle vidéo qui utilise ces données de positionnement pour placer et positionner le premier objet sur l'écran.

Sans sortir du cadre de la présente invention, et de manière non limitative, on peut afficher sur le dispositif d'affichage uniquement un premier objet représentatif de l'outil de traitement de sol, uniquement un premier objet représentatif de la zone de traitement ou bien encore des premier et second objets représentatifs respectivement de la zone de traitement et de l'outil de traitement de sol, ou inversement.

Dans les variantes où le premier objet est représentatif de l'outil de traitement de sol, les données de positionnement dudit outil permettent de déduire directement la position du premier objet sur le dispositif d'affichage, ce qui permet de positionner le premier objet représentatif de l'outil de traitement de sol sur le dispositif d'affichage. Un intérêt de cette variante est de visualiser la position de l'outil de traitement de sol, ce qui est particulièrement utile dans le cas où l'opérateur ne parviendrait pas à voir directement ce dernier. Par exemple, l'opérateur peut consulter le dispositif d'affichage si l'outil de traitement de sol est masqué par la machine de traitement.

Dans les variantes où le premier objet est représentatif de la zone de traitement, les données de positionnement de l'outil de traitement de sol sont utilisées comme références pour positionner le premier objet sur le dispositif d'affichage. La position du premier objet représentatif de la zone de traitement sur le dispositif d'affichage est donc également fonction des données de positionnement de l'outil de traitement de sol.

Quand bien même aucun objet représentatif de l'outil de traitement de sol ne serait affiché, les données de positionnement de ce dernier sont préférentiellement utilisées pour positionner correctement le premier objet représentatif de la zone de traitement sur le dispositif d'affichage. L'objet représentatif de la zone de traitement est positionné relativement à la position qu'aurait un objet représentatif de l'outil de traitement de sol s'il était affiché.

Un intérêt de cette variante est d'indiquer à l'opérateur la position de la zone de traitement afin qu'il puisse positionner l'outil de traitement de sol en regard de ladite zone. Le dispositif d'affichage permet alors de guider l'opérateur afin de positionner l'outil de traitement de sol en regard de la zone de traitement afin de pouvoir la traiter. Il est alors possible de s'affranchir du marquage de la zone de traitement directement sur le sol. En outre, il n'est alors pas nécessaire de requérir l'intervention d'un géomètre pour définir l'implantation de chaque zone de traitement, ce qui réduit les coûts engagés et le temps nécessaire pour débuter le traitement. En outre, cet affichage permet de s'affranchir du risque d'effacement du marquage au sol et améliore la précision de l'indication donnée à l'opérateur.

Grâce à l'invention, dans la mesure où les données de positionnement de l'outil de traitement de sol sont déterminées avec précision par le dispositif d'acquisition optique, ledit premier objet est positionné précisément sur le dispositif d'affichage, ce qui permet de traiter la zone de traitement de façon précise.

En outre, grâce à l'invention, l'opérateur peut facilement et rapidement être informé de la position de la zone de traitement et/ou de l'outil de traitement de sol.

Le premier objet peut présenter différentes représentations graphiques. Il peut présenter la forme d'un symbole ayant une géométrie simple, par exemple un cercle ou une croix. Un premier objet représentatif de l'outil de traitement de sol peut également être une image fidèle ou schématique dudit outil de traitement de sol. Le premier objet permet d'indiquer à l'opérateur où se situe l'outil de traitement de sol ou la zone de traitement.

Sans sortir du cadre de l'invention, on peut afficher des informations supplémentaires sur le dispositif d'affichage, par exemple sous forme de texte. On peut par exemple afficher des données concernant la zone de traitement, telles que ses dimensions, ses coordonnées, ou encore des données relatives au traitement à réaliser.

De préférence, la position du premier objet sur le dispositif d'affichage est mise à jour en temps réel, grâce à quoi l'opérateur est guidé en continu. Par suite, lorsque l'utilisateur déplace l'outil de traitement de sol, l'affichage et notamment la position du premier objet sur le dispositif d'affichage sont mis à jour. Ceci facilite les manœuvres de déplacement de l'outil de traitement de sol afin de le placer en regard de la zone de traitement.

Avantageusement, les données de positionnement de l'outil de traitement de sol comprennent au moins les coordonnées géographiques dudit outil de traitement de sol. Lesdites coordonnées peuvent être exprimées dans un référentiel global ou local. Elles peuvent être exprimées dans un plan ou dans l'espace. La position du premier objet sur le dispositif d'affichage est fonction desdites coordonnées géographiques.

De manière avantageuse, les données de positionnement de l'outil de traitement de sol peuvent également comprendre un vecteur d'orientation dudit outil de traitement de sol. Dans la variante où le premier objet est représentatif de l'outil de traitement de sol, la détermination du vecteur d'orientation de l'outil de traitement de sol peut également permettre d'orienter le premier objet affiché sur le dispositif d'affichage.

Selon un aspect avantageux de l'invention, l'étape de détermination des données de positionnement de l'outil de traitement de sol comprend une étape de reconnaissance de la forme de l'outil de traitement de sol. Un intérêt est d'identifier l'outil de traitement de sol et d'en déduire avec précision ses données de positionnement. L'étape de reconnaissance comporte avantageusement une étape d'analyse de la forme caractéristique de l'outil de traitement de sol et une étape de comparaison de cette forme avec des formes caractéristiques. Cette comparaison permet de déduire les données de positionnement de l'outil de traitement de sol.

L'étape de reconnaissance de la forme de l'outil de traitement met de préférence en œuvre un algorithme de reconnaissance du type algorithme d'apprentissage automatique.

De préférence, l'outil de traitement de sol s'étend selon un axe, les données de positionnement de l'outil de traitement de sol sont des données de positionnement dudit axe de l'outil de traitement de sol, et le premier objet est représentatif de l'axe de l'outil de traitement de sol. La représentation de l'axe de l'outil de traitement de sol apporte de la lisibilité et de précision sur le dispositif d'affichage, ce qui facilite le positionnement de l'outil de traitement de sol en regard de la zone de traitement.

L'outil de traitement de sol est de préférence, mais de manière non limitative, pivotant autour de cet axe.

Avantageusement, on fournit des données de positionnement du dispositif d'acquisition optique et on positionne sur le dispositif d'affichage le premier objet en outre à l'aide des données de positionnement du dispositif d'acquisition optique. Un intérêt est de déterminer précisément les données de positionnement de l'outil de traitement de sol et de positionner précisément le premier objet sur le dispositif d'affichage par rapport aux données de positionnement du dispositif d'acquisition optique.

De manière non limitative, le dispositif d'acquisition optique peut être fixe sur le chantier, de sorte que ses données de positionnement sont connues et ne varient pas au court du temps. Il n'est alors pas nécessaire de les déterminer ou de les mettre à jour.

De préférence, le dispositif d'acquisition optique est monté sur la machine, le procédé comprenant en outre une étape selon laquelle on détermine les données de positionnement du dispositif d'acquisition optique. Dans cette variante avantageuse, le dispositif d'acquisition optique est mobile avec la machine. Aussi, il convient de déterminer, de préférence en temps réel, ses données de positionnement, de manière à les mettre à jour avant de positionner le premier objet sur le dispositif d'affichage à l'aide desdites données de positionnement du dispositif d'acquisition optique.

De manière avantageuse, les données de positionnement du dispositif d'acquisition optique comprennent les coordonnées géographiques, l'orientation et/ou l'inclinaison dudit dispositif d'acquisition optique.

Les coordonnées géographiques sont de préférences exprimées dans le référentiel terrestre et comprennent la latitude, la longitude et éventuellement l'altitude du dispositif d'acquisition optique.

Préférentiellement, on détermine les coordonnées géographiques du dispositif d'acquisition optique à l'aide d'un organe de géolocalisation, par exemple un système GPS. Un tel organe de géolocalisation permet de connaitre précisément et en temps réel les coordonnées géographiques du dispositif d'acquisition optique. L'organe de géolocalisation peut également consister en un système GPS et une centrale inertielle.

En variante, les coordonnées géographiques du dispositif d'acquisition optique peuvent être déterminées relativement à un élément du chantier, tel qu'une balise. Cette détermination peut être mise en œuvre à l'aide d'un système de télédétection par laser ou LIDAR.

Selon un aspect particulièrement avantageux de l'invention, on affiche sur le dispositif d'affichage au moins un deuxième objet représentatif de l'outil de traitement de sol si le premier objet est représentatif de la zone de traitement ou de la zone de traitement si le premier objet est représentatif de l'outil de traitement de sol. On comprend donc qu'un objet représente l'outil de traitement de sol tandis qu'un autre objet représente la zone de traitement. Cet affichage permet à l'utilisateur de visualiser la position relative de la zone de traitement et de l'outil de traitement de sol.

En observant le dispositif d'affichage, l'opérateur est informé rapidement et précisément de la position de l'outil de traitement de sol afin de l'amener vers la position finale permettant de débuter le traitement.

De préférence, on réalise une étape de déplacement de l'outil de traitement de sol parallèlement au sol, de façon à positionner l'objet représentatif de l'outil de traitement de sol par rapport à l'objet représentatif de la zone de traitement. De préférence, mais de manière non limitative, l'objet représentatif de l'outil de traitement est fixe sur le dispositif d'affichage, tandis que l'objet représentatif de la zone de traitement est mobile sur ledit dispositif d'affichage.

L'opérateur peut déplacer l'outil de traitement de sol et observer le déplacement relatif de l'objet associé par rapport à l'objet représentatif de la zone de traitement sur le dispositif d'affichage. Il peut ensuite faire correspondre l'objet représentatif de l'outil de traitement de sol et l'objet représentatif de la zone de traitement avant de débuter le traitement de ladite zone de traitement.

L'opérateur peut notamment chercher à superposer les deux objets.

De manière non limitative, les deux objets peuvent présenter des représentations graphiques différentes, éventuellement complémentaires, afin de faciliter leur positionnement l'un par rapport à l'autre. Par exemple, l'objet représentatif de la zone de traitement peut présenter la forme d'un cercle tandis que l'objet représentatif de l'outil de traitement de sol peut présenter la forme d'une croix. L'opérateur peut alors déplacer l'outil de traitement de sol jusqu'à ce que ladite croix soit positionnée à l'intérieur du cercle.

De manière non limitative, le chantier peut présenter une pluralité de zones de traitement et le dispositif d'affichage est configuré pour afficher pour chaque zone de traitement, un objet représentatif de ladite zone de traitement.

Selon une première variante avantageuse, l'affichage sur le dispositif d'affichage est représentatif d'un plan horizontal, le premier objet étant représentatif de la projection verticale de l'outil de traitement de sol dans ledit plan horizontal et le deuxième objet étant représentatif de la projection verticale de la zone de traitement dans ledit plan horizontal. L'affichage est donc un affichage en deux dimensions et les premier et deuxième objets sont positionnés et se déplacent relativement l'un par rapport à l'autre dans ledit plan horizontal. L'affichage correspond de préférence à une vue de dessus du plan du sol du chantier.

Un intérêt est de faciliter la visualisation pour l'opérateur. En effet, dans ce mode de réalisation, l'affichage du chantier sur le dispositif d'affichage est proche de la représentation dudit chantier sur un plan ou une carte traditionnels. Un déplacement de l'outil de traitement de sol parallèlement au sol entraine avantageusement un déplacement de l'objet représentatif de l'outil de traitement de sol sur l'écran.

L'opérateur peut aisément repérer la position relative de la zone de traitement et de l'outil de traitement de sol à partir des objets en deux dimensions. L'opérateur est guidé efficacement dans le déplacement de l'outil de traitement de sol. En particulier, l'opérateur peut déplacer l'outil de traitement de sol jusqu'à ce que les objets représentatifs de l'outil de traitement de sol et la zone de traitement soient superposés. De manière non limitative, l'opérateur peut positionner l'outil de traitement de sol en se repérant sur le dispositif d'affichage. Le positionnement de l'outil de traitement de sol peut être réalisé même lorsque la zone de traitement ou l'outil de traitement de sol ne sont pas visibles pour l'opérateur.

Selon une seconde variante avantageuse, le premier objet est représentatif de la zone de traitement et on réalise en outre les étapes suivantes :
- on fournit au moins un dispositif de réalité augmentée comprenant ledit dispositif d'affichage et un dispositif d'acquisition d'images;
- on acquiert des images à l'aide du dispositif d'acquisition d'images et on affiche lesdites images sur le dispositif d'affichage;
- on détermine des données de positionnement du dispositif d'acquisition d'images ;
- lorsque le dispositif d'acquisition d'images est orienté vers la zone de traitement, on incruste dans les images affichées sur le dispositif d'affichage ledit premier objet représentatif de la zone de traitement, ledit premier objet étant positionné sur le dispositif d'affichage en outre à l'aide des données de positionnement du dispositif d'acquisition d'images, de sorte que ledit premier objet représentatif de la zone de traitement coïncide avec la zone de traitement affichée sur le dispositif d'affichage.

De manière non limitative, le dispositif de réalité augmentée peut comprendre un ordiphone, une tablette tactile ou encore une paire de lunettes de réalité augmentée. Le dispositif d'affichage comprend avantageusement un écran constituant l'écran du dispositif de réalité augmentée, par exemple les verres des lunettes de réalité augmentée ou l'écran de l'ordiphone.

Le dispositif d'acquisition d'images peut comprendre un appareil photo ou une caméra vidéo équipant le dispositif de réalité augmentée. Le dispositif d'acquisition d'images permet d'acquérir en temps réel des images du chantier qui sont affichées simultanément sur le dispositif d'affichage. Lorsque le dispositif d'acquisition d'images est orienté vers la zone de traitement, ladite zone de traitement est affichée sur le dispositif d'affichage.

Les données de positionnement du dispositif d'acquisition d'images comprennent de préférence les coordonnées géographiques du dispositif d'acquisition d'images ainsi que son orientation dans un plan horizontal et son inclinaison par rapport à un plan vertical.

La détermination des données de positionnement du dispositif d'acquisition d'images permet de positionner correctement le premier objet représentatif de la zone de traitement sur le dispositif d'affichage de sorte que ce dernier est superposé précisément avec la zone de traitement affichée. Le dispositif de réalité augmentée est de préférence muni d'un ou plusieurs éléments pris parmi un GPS, un inclinomètre, un gyroscope et un inclinomètre.

Un intérêt est de fournir à l'utilisateur un environnement de réalité augmentée lui permettant de visualiser rapidement, facilement et précisément la position précise de la zone de traitement. Ceci permet de s'affranchir du marquage au sol de la zone de traitement. En outre, dans ce mode de réalisation, l'utilisateur peut placer le dispositif de réalité augmentée dans son champ de vision et visualiser conjointement l'image du chantier et le premier objet. Il n'est pas tenu de déplacer son regard entre le chantier et un plan ou un écran déporté. Toute l'attention de l'opérateur est donc portée sur l'environnement du chantier, ce qui réduit les risques d'accidents.

L'affichage et la position du premier objet sur le dispositif d'affichage sont de préférence mis à jour en temps réel, de sorte qu'ils sont actualisés lors du déplacement du dispositif de réalité augmentée. L'affichage sur le dispositif d'affichage est donc dynamique et dépend de l'orientation et de la position adoptées par le dispositif de réalité augmentée.

On comprend que, dans cette variante non limitative, le dispositif d'acquisition optique est configuré pour déterminer précisément les données de positionnement de l'outil de traitement de sol afin de positionner avec précision le premier objet sur le dispositif d'affichage. Le dispositif d'acquisition optique permet notamment de déterminer des données de positionnement de l'outil de traitement de sol d'autant plus précises qu'il est disposé à proximité de l'outil de traitement de sol. En variante et de manière non limitative, le premier objet peut être représentatif de l'outil de traitement de sol. Un intérêt est de permettre à l'opérateur de visualiser précisément la position dudit outil de traitement de sol, notamment lorsque ce dernier n'est pas visible par l'opérateur depuis sa position, par exemple lorsque l'outil de traitement de sol est masqué par la machine.

Préférentiellement, ledit au moins un premier objet présente une représentation graphique qui est fonction de l'état d'avancement du traitement. Par exemple, la forme ou la couleur du premier objet peut varier selon que la zone de traitement est « traitée », c'est-à-dire que le traitement a déjà été réalisé, « en cours de traitement », ou « à traiter ». Un intérêt est de fournir rapidement à l'opérateur des informations sur les prochaines actions à entreprendre et notamment sur la prochaine zone à traiter.

Avantageusement, on calcule la distance entre l'outil de traitement de sol et la zone de traitement à l'aide des données de positionnement de l'outil de traitement de sol et des coordonnées géographiques de la zone de traitement, et ledit au moins un premier objet présente une représentation graphique qui est fonction de ladite distance calculée. Par exemple, la couleur du premier objet peut changer lorsque l'outil de traitement de sol s'approche de la zone de traitement. Un intérêt est d'assister l'opérateur plus efficacement.

En outre, dans le cas où plusieurs objets, chacun représentatif d'une zone de traitement, sont affichés, l'objet représentatif de la zone de traitement la plus proche de l'outil de traitement de sol peut présenter une représentation graphique différente de celle des autres objets. Un intérêt est d'indiquer à l'opérateur la zone de traitement la plus proche de son outil afin de l'amener à traiter cette zone de traitement en premier. Ceci permet de réduire les temps de déplacement de l'outil de traitement de sol entre les zones de traitement.

De préférence, le traitement du sol est un forage du sol, l'outil de traitement de sol est un outil de forage et la zone de traitement est une zone de forage. Un tel forage peut permettre la réalisation d'inclusions ou de pieux dans le sol.

De préférence, mais de manière non limitative, l'outil de forage est rotatif autour d'un axe, l'étape de détermination des données de positionnement de l'outil de forage étant réalisée pendant la mise en rotation de l'outil de forage autour dudit axe, et le premier objet étant représentatif de l'axe de l'outil de forage.

Sans sortir du cadre de l'invention, l'outil de forage peut être mobile en translation selon ledit axe et/ou rotatif autour dudit axe. En variante et de manière non limitative, le deuxième objet peut être représentatif de l'axe de l'outil de forage.

L'invention porte également sur un dispositif d'assistance au traitement d'un sol comprenant au moins une zone de traitement associée à un traitement du sol à réaliser, le dispositif comprenant :
- au moins un dispositif d'acquisition optique configuré pour déterminer des données de positionnement de l'outil de traitement de sol ; et
- un dispositif d'affichage configuré pour afficher au moins un premier objet représentatif de l'outil de traitement de sol ou de ladite zone de traitement, ledit premier objet étant positionné sur le dispositif d'affichage à l'aide des premières données de positionnement déterminées dudit axe de l'outil de traitement de sol et des coordonnées géographiques de ladite zone de traitement

L'invention porte par ailleurs sur une installation de traitement d'un sol comportant :
- une machine de traitement de sol comprenant un outil de traitement de sol ; et
- un dispositif d'assistance au traitement d'un sol selon l'invention.

Avantageusement, mais de manière non limitative, le dispositif d'acquisition optique est monté sur la machine de traitement de sol.

### Brève description des dessins

L'invention sera mieux comprise à la lecture de la description qui suit de modes de réalisation de l'invention donnés à titre d'exemples non limitatifs, en référence aux dessins annexés, sur lesquels :
[Fig. 1]la figure **1** illustre une installation de traitement d'un sol selon l'invention comprenant un premier mode de réalisation d'un dispositif d'assistance au traitement de sol ;
[Fig. 2]la figure **2** illustre le dispositif d'assistance au traitement de sol de l'installation de traitement de sol de la figure **1** ;
[Fig. 3]la figure **3** illustre le dispositif d'affichage du dispositif d'assistance au traitement de sol de la figure **2** ;
[Fig. 4]la figure **4** illustre le dispositif d'affichage de la figure **3** après positionnement de l'outil de traitement de sol ;
[Fig. 5]la figure **5** illustre l'installation de traitement de sol de la figure **1** après positionnement de l'outil de traitement de sol ;
[Fig. 6]la figure **6** illustre un second mode de réalisation d'un dispositif d'assistance au traitement de sol selon l'invention ;
[Fig. 7]la figure **7** illustre une installation de traitement de sol munie du dispositif d'assistance au traitement de sol de la figure **6** ; et
[Fig. 8]la figure **8** illustre une variante de l'installation de traitement de sol de la figure **1****.**

### Description des modes de réalisation

L'invention porte sur un procédé d'assistance au traitement d'un sol. Ce procédé permet de guider un opérateur dans le traitement d'une ou plusieurs portions de sol, formant des zones de traitement, à l'aide d'un outil de traitement de sol.

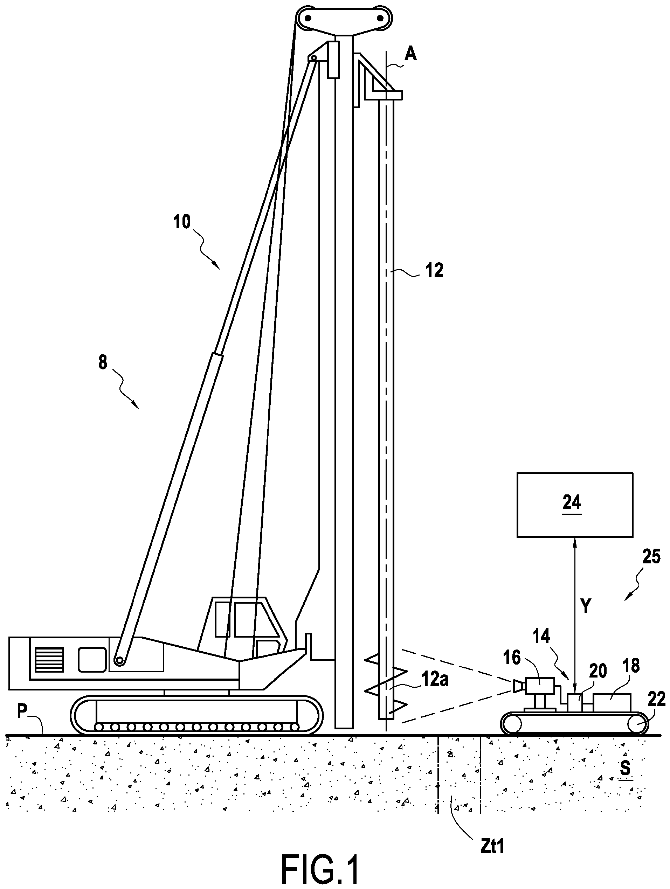

A l'aide des figures **1** à **5****,** on va décrire un premier mode de réalisation du procédé, conforme à la présente invention, d'assistance au traitement d'un sol sur un chantier. Ce procédé est mis en œuvre à l'aide d'un dispositif d'assistance au traitement. Dans cet exemple, le sol comprend une pluralité de portions de sol à traiter, nommées zones de traitement. Plus particulièrement, le sol comprend une première, une deuxième et une troisième zone de traitement. Sur la figure **1****,** seule la première zone de traitement **Zt1** est représentée.

La figure **1** illustre une installation **8** de traitement de sol selon l'invention. Conformément au procédé selon l'invention, on fournit une machine de traitement **10** comprenant un outil de traitement de sol **12** de sol ayant un pied **12a**. Cet outil de traitement de sol **12** est destiné à être introduit dans un sol **S** de manière à traiter une ou plusieurs zones de traitement. Dans cet exemple non limitatif, l'outil de traitement de sol **12** est un outil de forage configuré pour forer la ou les zones de traitement. Par conséquent, les zones de traitement constituent des zones de forage. Il est de préférence mais de manière non limitative cylindrique. Dans cet exemple non limitatif, l'outil de traitement de sol est rotatif autour d'un axe **A** et mobile en translation le long dudit axe **A.** En variante, il pourrait n'être que mobile en translation.

Les coordonnées géographiques **XZt** des zones de traitement sont connues et fournies. Elles peuvent être exprimées dans un référentiel global, par exemple le référentiel terrestre, ou dans un référentiel local, centré sur un élément du chantier tel qu'une balise.

On fournit par ailleurs un dispositif d'acquisition optique **14.** Dans cet exemple non limitatif, le dispositif d'acquisition optique **14** comprend une caméra vidéo **16** ainsi qu'un système GPS **18** permettant de déterminer des données de positionnement **X** du dispositif d'acquisition optique **14.** Le système GPS **18** constitue un organe de géolocalisation dudit dispositif d'acquisition optique **14.** Les données de positionnement **X** du dispositif d'acquisition optique **14** comprennent, dans cet exemple non limitatif, les coordonnées géographiques et un vecteur d'orientation du dispositif d'acquisition optique **14.**

Le dispositif d'acquisition optique comprend en outre un calculateur **20** communiquant avec la caméra vidéo **16** et avec le système GPS **18.** Le dispositif d'acquisition optique **14** est monté sur un véhicule autonome **22** mobile. Aussi, le dispositif d'acquisition optique **14** peut être déplacé sur le chantier.

Le dispositif d'acquisition optique **14** est configuré pour acquérir des images du pied **12a** de l'outil de traitement **12** à l'aide de la caméra vidéo **16.** Il est avantageusement positionné à proximité du pied **12a** de l'outil de traitement.

Comme on le constate sur la figure **1****,** le dispositif d'acquisition optique **14,** et plus précisément le calculateur **20,** communiquent avec un dispositif d'affichage **24.** De manière non limitative, la communication est réalisée via des moyens de communication sans fil de type Bluetooth ou Wi-Fi.

Le dispositif d'affichage **24** peut être intégré dans un ordiphone, une tablette tactile, ou un dispositif de réalité augmentée tel que des lunettes de réalité augmentée.

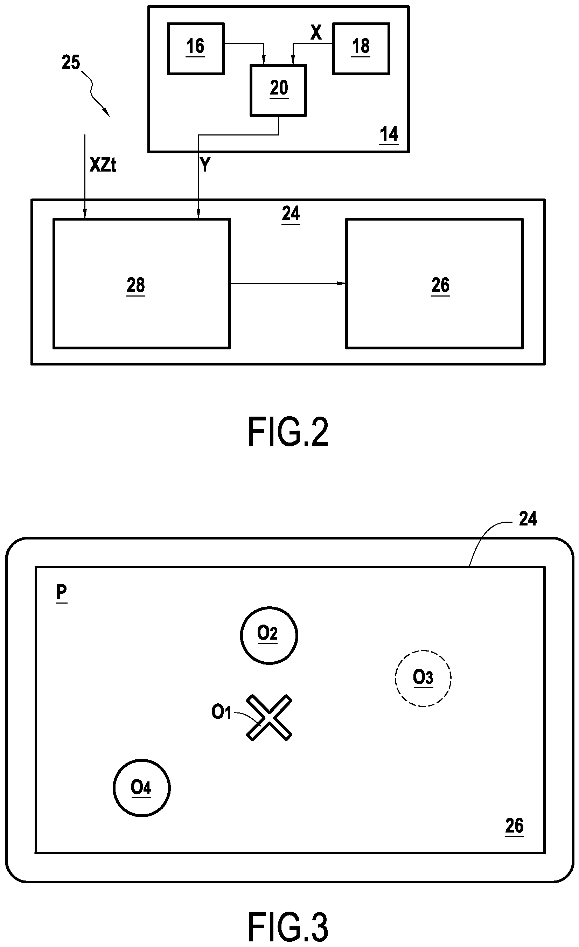

L'ensemble formé par le dispositif d'affichage **24** et le dispositif d'acquisition optique **14** forme un dispositif d'assistance au traitement **25** illustré en figure **2****.** L'installation **8** comprend ledit dispositif d'assistance au traitement **25** et la machine **10** munie de l'outil de traitement **12.**

Comme on peut le voir sur cette figure **2****,** le dispositif d'affichage **24** comprend, de manière non limitative, un écran **26** et un module de contrôle vidéo **28** communiquant avec l'écran **26.** Le module de contrôle vidéo **28** est configuré pour contrôler l'affichage sur l'écran **26** du dispositif d'affichage **24.**

Conformément au procédé d'assistance au traitement d'un sol selon l'invention, on détermine en premier lieu des données de positionnement **Y** de l'outil de traitement de sol **12** à l'aide du dispositif d'acquisition optique **14.** Dans cet exemple non limitatif, les données de positionnement **Y** de l'outil de traitement de sol comprennent les coordonnées géographiques dudit outil de traitement de sol **12.** Ces coordonnées géographiques correspondent aux coordonnées géographiques de l'axe **A** de l'outil de traitement de sol **12.** Elles peuvent être exprimées dans un référentiel global ou local et sont de préférence exprimées dans le même référentiel que les coordonnées géographiques du dispositif d'acquisition optique **14.**

Comme on peut le voir sur la figure **1****,** le dispositif d'acquisition optique **14** est amené à proximité du pied **12a** de l'outil de traitement de sol **12** à l'aide du véhicule autonome **22.** La caméra vidéo **16** du dispositif d'acquisition optique filme le pied **12a** de l'outil de traitement de sol **12.** Sans sortir du cadre de l'invention, le dispositif d'acquisition optique **14** pourrait comprendre une pluralité de caméras configurées pour filmer le pied de l'outil de traitement de sol sous différents angles. Les images acquises par la caméra vidéo **16** du dispositif d'acquisition optique **14** sont transmises au calculateur **20.**

Afin de déterminer les coordonnées de positionnement de l'outil de traitement de sol **12,** on réalise alors une étape de reconnaissance de la forme de l'outil de traitement de sol **12.** Pour ce faire, de manière non limitative, le calculateur **20** réalise une étape d'analyse de la forme caractéristique de l'outil de traitement de sol **12,** à partir des images transmises par la caméra vidéo **16** et une étape de comparaison de cette forme avec des formes caractéristiques, par exemple stockées dans une mémoire interne.

La reconnaissance de la forme de l'outil de traitement de sol **12** permet au calculateur **20** du dispositif d'acquisition optique de déterminer les données de positionnement **Y** de l'outil de traitement de sol **12.**

En parallèle, le système GPS **18** transmet en temps réel les données de positionnement **X** du dispositif d'acquisition optique **14,** qu'il a déterminées, au calculateur **20.** Aussi, dans cet exemple non limitatif, les données de positionnement **X** déterminées du dispositif d'acquisition optique **14** sont également utilisées pour déterminer les données de positionnement **Y** de l'outil de traitement de **sol 12.**

L'utilisation d'un dispositif d'acquisition optique **14** selon l'invention permet de déterminer très précisément les données de positionnement de l'outil de traitement de sol.

En outre, lesdites données de positionnement **Y** de l'outil de traitement de sol sont mises à jour en temps réel. Aussi, un déplacement de l'outil de traitement de sol **12** entraine une modification desdites données de positionnement **Y** de l'outil de traitement de sol **12.**

Les données de positionnement **Y** de l'outil de traitement de sol **12** sont ensuite transmises du calculateur **20** au module de contrôle vidéo **28** du dispositif d'affichage **24.**

On fournit par ailleurs les coordonnées géographiques **XZt** des zones de traitement. Dans cet exemple, ces coordonnées géographiques **XZt** sont fournies au module de contrôle vidéo **28.**

Le module de contrôle vidéo **28** commande alors l'affichage sur l'écran **26** du dispositif d'affichage **24.** Il est notamment configuré pour afficher et positionner sur l'écran **26** différents objets.

Dans ce premier mode de mise en œuvre du procédé selon l'invention, et tel qu'illustré en figure **3****,** le dispositif d'affichage **24** est intégré dans une tablette tactile. L'écran **26** forme donc un écran de ladite tablette tactile. Il est configuré pour afficher un plan en deux dimensions du chantier, en vue du dessus. L'affichage est donc représentatif d'un plan horizontal sensiblement parallèle au sol du chantier.

Dans cet exemple non limitatif, on affiche en outre sur l'écran **26** du dispositif d'affichage un premier objet **O₁** représentatif de l'axe **A** de l'outil de traitement de sol **12.** Ce premier objet **O₁** a pour représentation graphique une croix et est mobile sur l'écran **26.** Il représente une projection verticale de l'outil de traitement de sol sur le plan horizontal **P.**

On affiche par ailleurs, des deuxième **O₂**, troisième **O₃** et quatrième **O₄** objets représentatifs respectivement d'une première zone de traitement **Zt1,** d'une deuxième zone de traitement et d'une troisième zone de traitement distinctes. Seule la première zone de traitement **Zt1** est visible sur la figure **1****.** Les deuxième **O₂**, troisième **O₃** et quatrième **O₄** objets présentent une représentation graphique en forme de cercle et sont de manière non limitative fixes sur l'écran. Les deuxième **O₂**, troisième **O₃** et quatrième **O₄** objets sont représentatifs d'une projection des zones de traitement dans le plan horizontal **P.**

On positionne alors sur l'écran **26** lesdits objets **O₁**, **O₂**, **O₃**, **O₄** à partir des données de positionnement **Y** de l'outil de traitement de sol **12** précédemment déterminées et des coordonnées géographiques **XZt** des zones de traitement. L'affichage et le positionnement de ces objets sur l'écran **26** est réalisé par le module de contrôle vidéo **28.**

La position sur l'écran **26** du premier objet **O₁** représentatif de l'outil de traitement de sol **12** est déduite directement des données de positionnement **Y** et notamment, dans cet exemple non limitatif, des coordonnées géographiques déterminées de l'outil de traitement de sol **12.** Les coordonnées géographiques de l'outil de traitement de sol sont transposées en des coordonnées du premier objet sur l'écran.

La position sur l'écran des deuxième **O₂**, troisième **O₃** et quatrième **O₄** objets est également déterminée à partir des données de positionnement **Y** et notamment des coordonnées géographiques déterminées de l'outil de traitement de sol **12.** En effet, les données de positionnement **Y** de l'outil de traitement de sol **12** sont utilisées comme références pour positionner les objets représentatifs des zones de traitement sur l'écran. En d'autres termes, la position sur l'écran des deuxième **O₂**, troisième **O₃** et quatrième **O₄** objets est fonction de la position sur l'écran **26** du premier objet **O₁**. Les données de positionnement **Y** de l'outil de traitement de sol **12** sont également utilisées pour orienter l'affichage desdits objets sur l'écran, par exemple en fonction de la direction de déplacement de la machine de traitement.

Un intérêt d'utiliser l'outil de traitement de sol **12** et ses données de positionnement comme référence pour positionner les objets sur l'écran est de les positionner plus précisément en limitant les risques d'imprécisions dans le positionnement des différents objets sur l'écran.

Dans cet exemple non limitatif, les deuxième **O₂** et quatrième **O₄** objets sont représentés en traits pleins de manière à indiquer que les première et troisième zones de traitement sont « à traiter ». Le troisième objet est représenté en pointillés de manière à indiquer que la deuxième zone de traitement est déjà « traitée ».

La position du premier objet **O₁** représentatif de l'outil de traitement de sol **12** sur l'écran **26** est mise à jour en temps réel. Aussi, une modification des données de positionnement **Y** de l'outil de traitement de sol entraine une modification de la position du premier objet **O₁** sur l'écran **26.**

Lorsque l'opérateur déplace l'outil de traitement de sol **12** dans le plan horizontal par rapport au sol **S,** les données de positionnement **Y** dudit outil de traitement de sol **12** sont modifiées et le premier objet **O₁** est déplacé sur l'écran.

Dès lors, l'opérateur peut déplacer l'outil de traitement de sol **12** horizontalement, par exemple en déplaçant la machine, et consulter simultanément l'écran **26** du dispositif d'affichage **24** afin de visualiser la position relative du premier objet **O₁** par rapport aux objets **O₂**, **O₃**, **O₄** représentatifs des zones de traitement.

En variante, et de manière non limitative, le premier objet **O₁** pourrait être fixe sur l'écran tandis que les objets **O₂**, **O₃**, **O₄** représentatifs des zones de traitement se déplacent, en fonction du déplacement de l'outil de traitement de sol **12.**

De cette manière, l'opérateur est guidé dans le déplacement de l'outil de traitement de sol **12** sur le chantier et notamment vers les zones de traitement. Le dispositif d'acquisition optique est de préférence déplacé de manière à conserver la distance séparant la caméra vidéo **16** et l'outil de traitement **12** sensiblement constante.

Comme illustré par le passage de la figure **3** à la figure **4****,** l'opérateur peut par exemple déplacer l'outil de traitement de sol **12** jusqu'à ce que le premier objet **O₁** représentatif de l'outil de traitement de sol **12** coïncide avec le deuxième objet **O₂** représentatif de la première zone de traitement **Zt1.** Ceci se traduit par la croix s'étendant à l'intérieur du cercle.

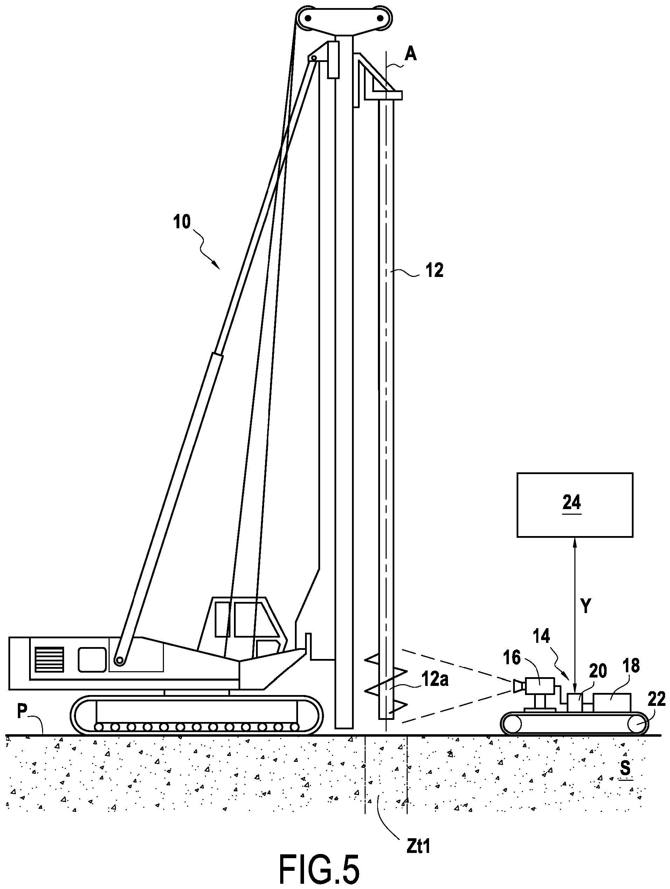

Dès lors, dans la mesure où les données de positionnement **Y** de l'outil de traitement de sol ont été déterminées avec précision grâce au dispositif d'acquisition optique **14,** et dans la mesure où les objets sont positionnés sur l'écran du dispositif d'affichage à l'aide de ces données de positionnement **Y,** l'outil de traitement de sol **12** est alors disposé précisément en regard de la première zone de traitement **Zt1.** En d'autres mots, et comme on peut le voir en figure **5****,** les coordonnées géographiques de l'outil de traitement de sol sont alors identiques aux coordonnées géographiques de la première zone de traitement **Zt1.** En outre, la première zone de traitement **Zt1** s'étend selon un axe qui est alors sensiblement confondu avec l'axe **A** de l'outil de traitement de sol.

L'opérateur peut procéder au traitement de la première zone de traitement **Zt1** en introduisant l'outil de traitement de sol **12** dans le sol **S,** par déplacement vertical vers le bas. Le traitement consiste dans cet exemple au forage de la première zone de traitement **Zt1.**

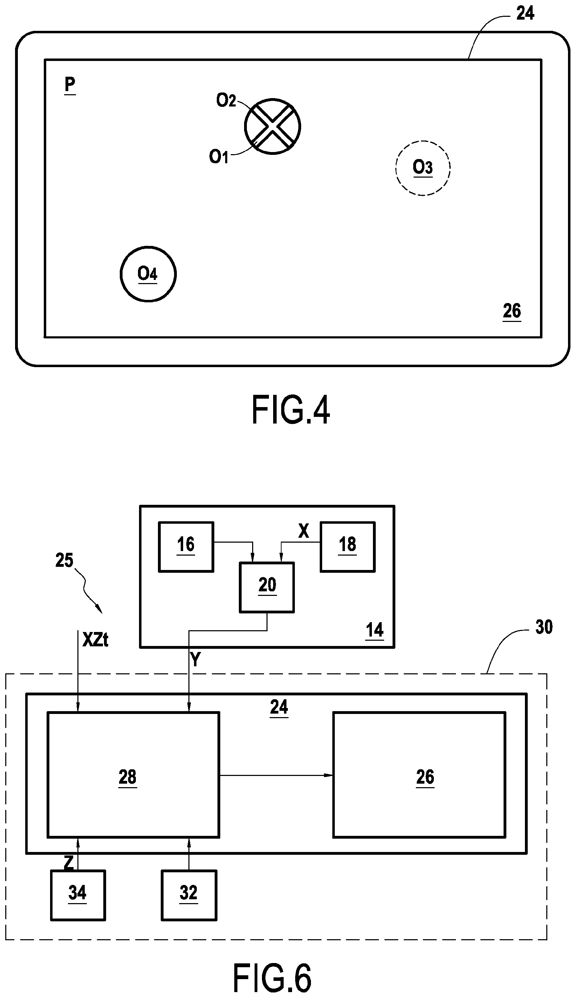

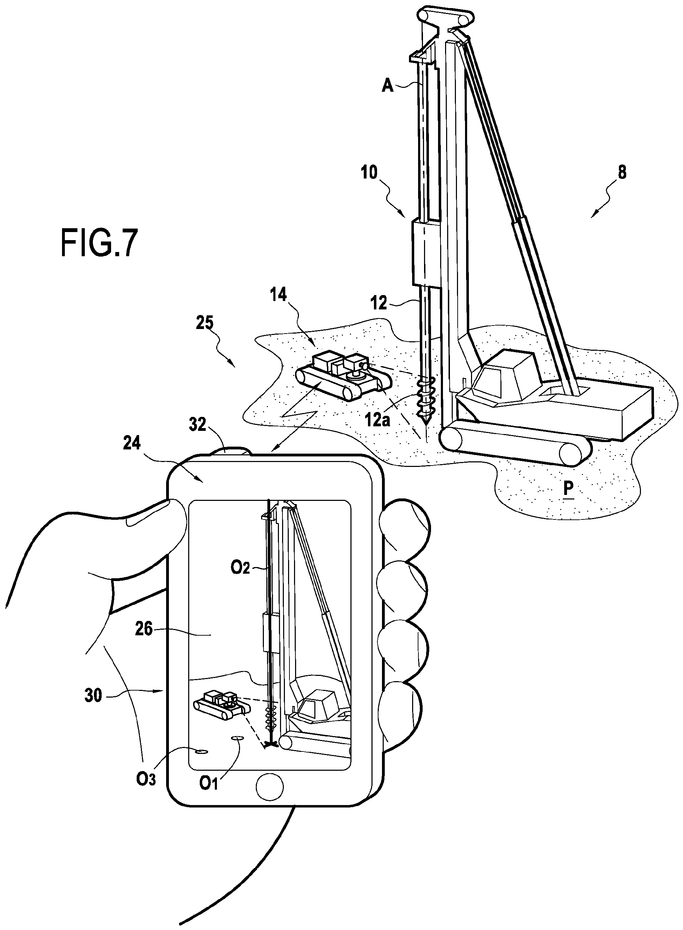

Les figures **6** et **7** illustrent un second mode de mise en œuvre du procédé de traitement de sol selon l'invention à l'aide d'un dispositif de traitement de sol **25.** Dans cet exemple non limitatif, on fournit un dispositif de réalité augmenté **30** comprenant un dispositif d'affichage **24** tel que décrit précédemment et un dispositif d'acquisition d'images **32.** Le dispositif de réalité augmenté **30** comprend un ordiphone tandis que le dispositif d'acquisition d'images **32** comprend une caméra vidéo équipant l'ordiphone. Sans sortir du cadre de l'invention, le dispositif de réalité augmentée **30** pourrait être une paire de lunettes de réalité augmentée. Le dispositif d'acquisition d'image **32** est configuré pour acquérir des images, notamment du chantier.

Le dispositif de réalité augmentée **30** comprend également, de manière classique, un dispositif de positionnement **34,** par exemple un GPS, permettant de déterminer des données de positionnement **Z** du dispositif d'acquisition d'images **32.** Ces données de positionnement **Z** comprennent notamment les coordonnées géographiques du dispositif d'acquisition d'images **32** ainsi que son orientation dans le plan horizontal **P** et son inclinaison par rapport à un plan vertical.

Comme précédemment, le dispositif d'affichage comprend un écran **26** et un module de contrôle vidéo **28.** En outre, le dispositif d'assistance au traitement d'un sol **25** comprend le dispositif de réalité augmentée **30** et un dispositif d'acquisition optique **14** tel que décrit précédemment.

On va maintenant décrire plus en détail ce second mode de mise en œuvre du procédé d'assistance au traitement d'un sol à l'aide de ce dispositif d'assistance au traitement de sol **25.**

Comme on le voit sur la figure **7****,** lorsque l'opérateur positionne le dispositif de réalité augmentée **30** de sorte que le dispositif d'acquisition d'images **32** filme le chantier, l'image d'une partie du chantier est affichée sur l'écran **26** du dispositif d'affichage **24.** On réalise donc une étape d'acquisition d'images suivie d'une étape d'affichage des images.

On détermine ensuite les données de positionnement **Z** du dispositif d'acquisition d'images à l'aide du module de positionnement **34.**

Sur la figure **7****,** on remarque que la machine **10,** l'outil de traitement de sol **12** et une partie du sol **S** sont dans le champ de vision du dispositif d'acquisition d'images **32,** de sorte qu'une image de ces derniers est affichée sur l'écran **26** du dispositif d'affichage **24** du dispositif de réalité augmentée **30.**

Dans cet exemple non limitatif, le module de contrôle vidéo **28** est alors configuré pour incruster dans les images affichées sur l'écran **26** des premier objet **O₁'** et troisième **O₃'** objet représentatifs respectivement d'une première et d'une deuxième zones de traitement ainsi qu'un deuxième objet **O₂'** représentatif de l'outil de traitement de sol **12.** Ledit deuxième objet **O₂'** est plus précisément représentatif de l'axe **A** de l'outil de traitement de sol **12.** Le deuxième objet **O₂'** consiste en une droite et comporte en outre, de manière non limitative, une croix en son extrémité inférieure représentant l'intersection de l'axe de l'outil de traitement de sol avec le plan horizontal **P** du sol du chantier. Les premier et troisième objets **O₁**',**O₃**' présentent la forme de cercles donc l'inclinaison varie en fonction de l'orientation du dispositif de réalité augmentée **30.**

Lesdits objets **O₁',O₂',O₃'** sont positionnés sur l'écran **26** du dispositif d'affichage **24** à l'aide du module de contrôle vidéo **28** du dispositif d'affichage, à partir des données de positionnement **Z** du dispositif d'acquisition d'images, déterminées précédemment à l'aide du module de positionnement **34,** ainsi que des données de positionnement **Y** de l'outil de traitement de sol **12.** Les données de positionnement **Y** de l'outil de traitement de sol **12** sont déterminées comme précédemment par le dispositif d'acquisition optique **14.** Cette détermination met de préférence en œuvre une étape de reconnaissance de la forme de l'outil de traitement.

Les premier et troisième objets sont en outre positionnés à l'aide des coordonnées géographiques connues des zones de traitement.

Le deuxième objet **O₂'** est positionné de manière à coïncider avec l'outil de traitement de sol **12.** Le deuxième objet apparait confondu avec l'axe **A** de l'outil de traitement de sol. Les premier et troisième objets **O₁',O₃'** sont positionnés de manière à coïncider avec les zones de traitement affichées sur l'écran **26.** Ils apparaissent positionnés dans le plan du sol.

Le dispositif d'acquisition optique **14** étant disposé à proximité du pied **12a** de l'outil de traitement de sol **12,** il permet de déterminer précisément les données de positionnement **Y** de l'outil de traitement de sol. L'utilisation d'un tel dispositif d'acquisition optique **14** selon l'invention permet d'améliorer la précision du positionnement des objets incrustés sur l'écran par rapport aux systèmes de l'art antérieur.

On comprend que grâce à l'invention, l'opérateur peut savoir facilement et rapidement où sont situés les zones de traitement et l'outil de traitement de sol et visualiser la position relative de l'outil de traitement de sol **12** par rapport auxdites zones de traitement. Il n'est pas nécessaire de réaliser un marquage du sol ou de faire appel à un géomètre pour localiser les zones de traitement.

Dans cet exemple non limitatif, le module de contrôle vidéo **28** peut calculer la distance entre l'outil de traitement de sol **12** et respectivement les première et deuxième zones de traitement et comparer ces distances. Il peut alors afficher le premier objet **O₁'** dans une couleur différente de celle du troisième objet **O₃'**, afin d'indiquer à l'utilisateur que la première zone de traitement **Zt1** est la plus proche de l'outil de traitement de sol **12.**

L'affichage et la position des objets sur l'écran est mise à jour en temps réel, de sorte qu'un déplacement de l'outil de traitement de sol **12** ou du dispositif d'acquisition d'images **32** entraine une mise à jour de l'affichage et de la position desdits objets sur l'écran **26.**

L'opérateur peut déplacer l'outil de traitement de sol dans le plan horizontal **P** par rapport au sol **S** et consulter simultanément l'écran du dispositif de réalité augmentée **30** afin de visualiser l'évolution de la position relative du deuxième objet par rapport aux objets représentatif des zones de traitement. L'outil de traitement de sol **12** peut être déplacé jusqu'à ce que la croix du deuxième objet **O₂'** représentatif de l'outil de traitement de sol **12** s'étende dans le cercle du premier objet **O₁'** représentatif de la première zone de traitement. De cette manière, l'opérateur est guidé dans le déplacement de l'outil de traitement de sol sur le chantier et notamment vers la zone de traitement et bénéficie d'une indication visuelle lorsque l'outil de traitement est disposé précisément en regard de la première zone de traitement. Il peut alors être procédé au traitement de la première zone de traitement.

Sans sortir du cadre de l'invention, l'opérateur pourrait se placer dans la cabine de la machine **10.** Dans ce cas de figure, le deuxième objet **O₂'** représentatif de l'outil de traitement de sol **12** lui permettrait de visualiser la position dudit outil de traitement de sol, quand bien même ce dernier serait caché par le mât de la machine.

De manière non limitative, seuls les objets représentatifs des zones de traitement pourraient être affichés.

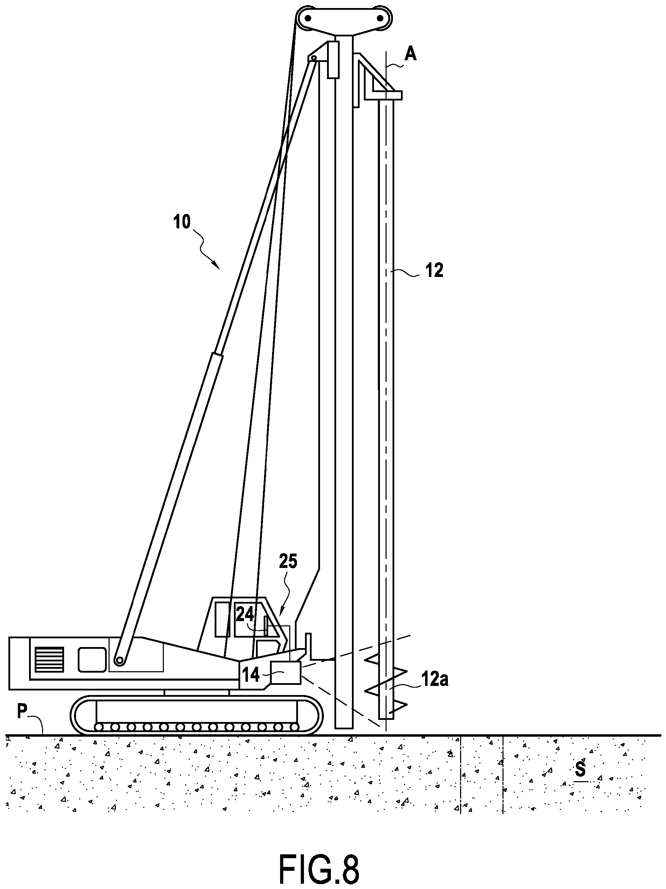

La figure **8** illustre une variante de l'installation de traitement de sol de la figure **1****.** Dans cet exemple non limitatif, le dispositif d'acquisition optique **14** du dispositif d'assistance au traitement de sol **25** est monté sur la machine de traitement **10.** Aussi, la distance séparant le dispositif d'acquisition optique **14** et l'outil de traitement de sol **12** reste sensiblement constante. Le dispositif est de préférence monté amovible sur la machine de traitement.

Comme dans les modes de réalisation décrits précédemment, le dispositif d'acquisition optique **14** comprend notamment un système GPS **18,** une caméra vidéo **16** et un calculateur **20.** Il est configuré pour déterminer les données de positionnement **Y** de l'outil de traitement de sol, par exemple en filmant le pied **12a** dudit outil de traitement de sol à l'aide de la caméra vidéo. Il communique en outre avec un dispositif d'affichage **24.** Dans cet exemple non limitatif, le dispositif d'affichage **24** est disposé dans la cabine de la machine de traitement **10.**

## Revendications

1. Procédé d'assistance au traitement d'un sol comprenant les étapes suivantes :
- on fournit une machine (10) comprenant un outil de traitement de sol (12) destiné à être introduit dans le sol ;
- on fournit des coordonnées géographiques d'au moins une zone de traitement (Zt1) associée à un traitement du sol à réaliser ;
- on fournit au moins un dispositif d'acquisition optique (14) ;
- on détermine des données de positionnement (Y) de l'outil de traitement de sol à l'aide du dispositif d'acquisition optique ;
- on fournit un dispositif d'affichage (24);
- on affiche sur ledit dispositif d'affichage au moins un premier objet (O₁,O₁') représentatif de l'outil de traitement de sol (12) ou de ladite au moins une zone de traitement ; et
- on positionne sur le dispositif d'affichage ledit premier objet à l'aide des données de positionnement de l'outil de traitement de sol (12) précédemment déterminées et des coordonnées géographiques de ladite zone de traitement.

2. Procédé d'assistance au traitement d'un sol selon la revendication **1**, dans lequel la position du premier objet (O₁,O₁') sur le dispositif d'affichage (24) est mise à jour en temps réel.

3. Procédé d'assistance au traitement d'un sol selon la revendication **1** ou **2,** dans lequel les données de positionnement (Y) de l'outil de traitement de sol (12) comprennent au moins les coordonnées géographiques dudit outil de traitement de sol.

4. Procédé d'assistance au traitement d'un sol selon l'une quelconque des revendications **1** à **3,** dans lequel l'étape de détermination des données de positionnement (Y) de l'outil de traitement de sol (12) comprend une étape de reconnaissance de la forme de l'outil de traitement de sol.

5. Procédé d'assistance au traitement d'un sol selon l'une quelconque des revendications **1** à **4,** dans lequel l'outil de traitement de sol (12) s'étend selon un axe (A), dans lequel les données de positionnement (Y) de l'outil de traitement de sol sont des données de positionnement dudit axe de l'outil de traitement de sol, et dans lequel le premier objet (O₁,O₁') est représentatif de l'axe de l'outil de traitement de sol.

6. Procédé d'assistance au traitement d'un sol selon l'une quelconque des revendications **1** à **5,** comprenant l'étape selon laquelle on fournit des données de positionnement (X) du dispositif d'acquisition optique (14) et dans lequel on positionne sur le dispositif d'affichage (24) le premier objet (O₁,O₁') en outre à l'aide des données de positionnement du dispositif d'acquisition optique.

7. Procédé d'assistance au traitement d'un sol selon la revendication **6,** dans lequel le dispositif d'acquisition optique (14) est monté sur la machine (10), le procédé comprenant en outre une étape selon laquelle on détermine les données de positionnement (X) du dispositif d'acquisition optique.

8. Procédé d'assistance au traitement d'un sol selon la revendication **6** ou **7,** dans lequel les données de positionnement (X) du dispositif d'acquisition optique (14) comprennent les coordonnées géographiques, l'orientation et/ou l'inclinaison dudit dispositif d'acquisition optique.

9. Procédé d'assistance au traitement d'un sol selon la revendication **8,** dans lequel on détermine les coordonnées géographiques du dispositif d'acquisition optique (14) à l'aide d'un organe de géolocalisation, par exemple un système GPS (18).

10. Procédé d'assistance au traitement d'un sol selon l'une quelconque des revendications **1** à **9,** dans lequel on affiche sur le dispositif d'affichage (24) au moins un deuxième objet (O₂,O₂') représentatif de l'outil de traitement de sol (12) si le premier objet est représentatif de la zone de traitement (Zt1) ou de la zone de traitement si le premier objet (O₁,O₁') est représentatif de l'outil de traitement de sol.

11. Procédé d'assistance au traitement d'un sol selon la revendication **10,** dans lequel on réalise une étape de déplacement de l'outil de traitement de sol (12) parallèlement au sol, de façon à positionner l'objet (O₁,O₂') représentatif de l'outil de traitement de sol par rapport à l'objet (O₂,O₁') représentatif de la zone de traitement (Zt1).

12. Procédé d'assistance au traitement d'un sol selon la revendication **10** ou **11,** dans lequel l'affichage sur le dispositif d'affichage (24) est représentatif d'un plan horizontal (P), le premier objet (O₁) étant représentatif de la projection verticale de l'outil de traitement de sol (12) dans ledit plan horizontal et le deuxième objet (O₂) étant représentatif de la projection verticale de la zone de traitement (Zt1) dans ledit plan horizontal.

13. Procédé d'assistance au traitement d'un sol selon l'une quelconque des revendications **1** à **11**, dans lequel le premier objet (O₁') est représentatif de la zone de traitement (Zt1) et dans lequel on réalise en outre les étapes suivantes :
- on fournit au moins un dispositif de réalité augmentée comprenant ledit dispositif d'affichage (24) et un dispositif d'acquisition d'images;
- on acquiert des images à l'aide du dispositif d'acquisition d'images (32) et on affiche lesdites images sur le dispositif d'affichage;
- on détermine des données de positionnement (Z) du dispositif d'acquisition d'images ;
- lorsque le dispositif d'acquisition d'images est orienté vers la zone de traitement (Zt1), on incruste dans les images affichées sur le dispositif d'affichage ledit premier objet (O₁') représentatif de la zone de traitement, ledit premier objet étant positionné sur le dispositif d'affichage en outre à l'aide des données de positionnement du dispositif d'acquisition d'images, de sorte que ledit premier objet représentatif de la zone de traitement coïncide avec la zone de traitement affichée sur le dispositif d'affichage.

14. Procédé d'assistance au traitement d'un sol selon l'une quelconque des revendications **1** à **13**, dans lequel ledit au moins un premier objet (O₁,O₁') présente une représentation graphique qui est fonction de l'état d'avancement du traitement.

15. Procédé d'assistance au traitement d'un sol selon l'une quelconque des revendications **1** à **14**, dans lequel on calcule la distance entre l'outil de traitement de sol (12) et la zone de traitement (Zt1) à l'aide des premières données de positionnement (Y) de l'outil de traitement de sol et des coordonnées géographiques de la zone de traitement, et dans lequel ledit au moins un premier objet (O₁,O₁') présente une représentation graphique qui est fonction de ladite distance calculée.

16. Procédé d'assistance au traitement d'un sol selon l'une quelconque des revendications **1** à **15,** dans lequel le traitement du sol est un forage du sol, dans lequel l'outil de traitement de sol (12) est un outil de forage et dans lequel la zone de traitement (Zt1) est une zone de forage.

17. Procédé d'assistance au traitement d'un sol selon la revendication **16,** dans lequel l'outil de forage est rotatif autour d'un axe (A), dans lequel l'étape de détermination des données de positionnement (Y) de l'outil de forage est réalisée pendant la mise en rotation de l'outil de forage autour dudit axe, et dans lequel le premier objet (O₁) est représentatif de l'axe de l'outil de forage.

18. Dispositif d'assistance au traitement d'un sol (25) comprenant au moins une zone de traitement (Zt1) associée à un traitement du sol à réaliser, le dispositif comprenant :
- au moins un dispositif d'acquisition optique (14) configuré pour déterminer des données de positionnement (Y) de l'outil de traitement de sol (12) ; et
- un dispositif d'affichage (24) configuré pour afficher au moins un premier objet représentatif de l'outil de traitement de sol ou de ladite zone de traitement, ledit premier objet étant positionné sur le dispositif d'affichage à l'aide des données de positionnement déterminées dudit axe de l'outil de traitement de sol et des coordonnées géographiques de ladite zone de traitement.

19. Installation de traitement d'un sol comportant :
- une machine de traitement de sol comprenant un outil de traitement de sol (12) ; et
- un dispositif d'assistance au traitement d'un sol (25) selon la revendication **18.**

20. Installation de traitement d'un sol selon la revendication **19,** dans laquelle le dispositif d'acquisition optique (14) est monté sur la machine de traitement de sol.

## Patentansprüche

1. Verfahren zur Unterstützung der Behandlung eines Bodens, umfassend die folgenden Schritte:
- Bereitstellen einer Maschine (10), die ein Bodenbehandlungswerkzeug (12) umfasst, das dazu bestimmt ist, in den Boden eingeführt zu werden,
- Bereitstellen von geografischen Koordinaten von mindestens einem Behandlungsbereich (Zt1), der einer durchzuführenden Bodenbehandlung zugeordnet ist,
- Bereitstellen von mindestens einer optischen Erfassungsvorrichtung (14),
- Bestimmen der Positionierungsdaten (Y) des Bodenbehandlungswerkzeugs mithilfe der optischen Erfassungsvorrichtung,
- Bereitstellen einer Anzeigevorrichtung (24),
- Anzeigen von mindestens einem ersten Objekt (O₁, O₁') auf der Anzeigevorrichtung, welches das Bodenbehandlungswerkzeug (12) oder den mindestens einen Behandlungsbereich darstellt, und
- Positionieren des ersten Objekts auf der Anzeigevorrichtung mithilfe der zuvor bestimmten Positionierungsdaten des Bodenbehandlungswerkzeugs (12) und der geografischen Koordinaten des Behandlungsbereichs.

2. Verfahren zur Unterstützung der Behandlung eines Bodens nach Anspruch 1, wobei die Position des ersten Objekts (O₁, O₁') auf der Anzeigevorrichtung (24) in Echtzeit umgesetzt wird.

3. Verfahren zur Unterstützung der Behandlung eines Bodens nach Anspruch 1 oder 2, wobei die Positionierungsdaten (Y) des Bodenbehandlungswerkzeugs (12) mindestens die geografischen Koordinaten des Bodenbehandlungswerkzeugs umfassen.

4. Verfahren zur Unterstützung der Behandlung eines Bodens nach einem der Ansprüche 1 bis 3, wobei der Schritt des Bestimmens der Positionierungsdaten (Y) des Bodenbehandlungswerkzeugs (12) einen Schritt des Erkennens der Form des Bodenbehandlungswerkzeugs umfasst.

5. Verfahren zur Unterstützung der Behandlung eines Bodens nach einem der Ansprüche 1 bis 4, wobei sich das Bodenbehandlungswerkzeug (12) entlang einer Achse (A) erstreckt, wobei die Positionierungsdaten (Y) des Bodenbehandlungswerkzeugs Positionierungsdaten der Achse des Bodenbehandlungswerkzeugs sind und wobei das erste Objekt (O₁, O₁') die Achse des Bodenbehandlungswerkzeugs darstellt.

6. Verfahren zur Unterstützung der Behandlung eines Bodens nach einem der Ansprüche 1 bis 5, umfassend den Schritt, in dem die Positionierungsdaten (X) der optischen Erfassungsvorrichtung (14) bereitgestellt werden und in dem das erste Objekt (O₁, O₁') ferner mithilfe der Positionierungsdaten der optischen Erfassungsvorrichtung auf der Anzeigevorrichtung (24) positioniert wird.

7. Verfahren zur Unterstützung der Behandlung eines Bodens nach Anspruch 6, wobei die optische Erfassungsvorrichtung (14) auf der Maschine (10) montiert ist, wobei das Verfahren ferner einen Schritt umfasst, in dem die Positionierungsdaten (X) der optischen Erfassungsvorrichtung bestimmt werden.

8. Verfahren zur Unterstützung der Behandlung eines Bodens nach Anspruch 6 oder 7, wobei die Positionierungsdaten (X) der optischen Erfassungsvorrichtung (14) die geografischen Koordinaten, die Ausrichtung und/oder die Neigung der optischen Erfassungsvorrichtung umfassen.

9. Verfahren zur Unterstützung der Behandlung eines Bodens nach Anspruch 8, wobei die geografischen Koordinaten der optischen Erfassungsvorrichtung (14) mithilfe eines Geolokalisierungselements, zum Beispiel eines GPS-Systems (18), bestimmt werden.

10. Verfahren zur Unterstützung der Behandlung eines Bodens nach einem der Ansprüche 1 bis 9, wobei auf der Anzeigevorrichtung (24) mindestens ein zweites Objekt (O₂, O₂') angezeigt wird, welches das Bodenbehandlungswerkzeug (12) darstellt, wenn das erste Objekt den Behandlungsbereich (Zt1) darstellt, oder den Behandlungsbereich, wenn das erste Objekt (O₁, O₁') das Bodenbehandlungswerkzeug darstellt.

11. Verfahren zur Unterstützung der Behandlung eines Bodens nach Anspruch 10, wobei ein Schritt des Verschiebens des Bodenbehandlungswerkzeugs (12) parallel zu dem Boden umgesetzt wird, um das Objekt (O₁, O₂'), welches das Bodenbehandlungswerkzeug darstellt, in Bezug auf das Objekt (O₂, O₁'), welches den Behandlungsbereich (Zt1) darstellt, zu positionieren.

12. Verfahren zur Unterstützung der Behandlung eines Bodens nach Anspruch 10 oder 11, wobei die Anzeige auf der Anzeigevorrichtung (24) eine horizontale Ebene (P) darstellt, wobei das erste Objekt (O₁) die vertikale Projektion des Bodenbehandlungswerkzeugs (12) in der horizontalen Ebene darstellt und das zweite Objekt (O₂) die vertikale Projektion des Behandlungsbereichs (Zt1) in der horizontalen Ebene darstellt.

13. Verfahren zur Unterstützung der Behandlung eines Bodens nach einem der Ansprüche 1 bis 11, wobei das erste Objekt (O₁) den Behandlungsbereich (Zt1) darstellt und wobei ferner die folgenden Schritte umgesetzt werden:
- Bereitstellen von mindestens einer Augmented-Reality-Vorrichtung, welche die Anzeigevorrichtung (24) und eine Bilderfassungsvorrichtung umfasst,
- Erfassen von Bildern mithilfe der Bilderfassungsvorrichtung (32) und Anzeigen der Bilder auf der Anzeigevorrichtung,
- Bestimmen der Positionierungsdaten (Z) der Bilderfassungsvorrichtung,
- wenn die Bilderfassungsvorrichtung zu dem Behandlungsbereich (Zt1) ausgerichtet ist, Festsetzen des ersten Objekts (O₁'), das den Behandlungsbereich darstellt, in den Bildern, die auf der Anzeigevorrichtung angezeigt werden, wobei das erste Objekt auf der Anzeigevorrichtung ferner mithilfe der Positionierungsdaten der Bilderfassungsvorrichtung positioniert ist, sodass das erste Objekt, das den Behandlungsbereich darstellt, mit dem Behandlungsbereich, der auf der Anzeigevorrichtung angezeigt wird, zusammenfällt.

14. Verfahren zur Unterstützung der Behandlung eines Bodens nach einem der Ansprüche 1 bis 13, wobei das mindestens eine erste Objekt (O₁, O₁') eine grafische Darstellung darstellt, die von dem Zustand des Fortschritts der Behandlung abhängt.

15. Verfahren zur Unterstützung der Behandlung eines Bodens nach einem der Ansprüche 1 bis 14, wobei der Abstand zwischen dem Bodenbehandlungswerkzeug (12) und dem Behandlungsbereich (Zt1) mithilfe der ersten Positionierungsdaten (Y) des Bodenbehandlungswerkzeugs und geografischen Koordinaten des Behandlungsbereichs berechnet wird und wobei das mindestens eine erste Objekt (O₁, O₁') eine grafische Darstellung darstellt, die von dem berechneten Abstand abhängt.

16. Verfahren zur Unterstützung der Behandlung eines Bodens nach einem der Ansprüche 1 bis 15, wobei die Behandlung des Bodens ein Bohren des Bodens ist, wobei das Bodenbehandlungswerkzeug (12) ein Bohrwerkzeug ist und wobei der Behandlungsbereich (Zt1) ein Bohrbereich ist.

17. Verfahren zur Unterstützung der Behandlung eines Bodens nach Anspruch 16, wobei sich das Bohrwerkzeug um die Achse (A) dreht, wobei der Schritt des Bestimmens der Positionierungsdaten (Y) des Bohrwerkzeugs während der Drehung des Bohrwerkzeugs um die Achse umgesetzt wird und wobei das erste Objekt (O₁) die Achse des Bohrwerkzeugs darstellt.

18. Vorrichtung zur Unterstützung der Behandlung eines Bodens (25), umfassend mindestens einen Behandlungsbereich (Zt1), der mit einer umzusetzenden Behandlung des Bodens assoziiert ist, wobei die Vorrichtung umfasst:
- mindestens eine optische Erfassungsvorrichtung (14), die dazu ausgestaltet ist, die Positionierungsdaten (Y) des Bodenbehandlungswerkzeugs (12) zu bestimmen, und
- eine Anzeigevorrichtung (24), die dazu ausgestaltet ist, mindestens ein erstes Objekt, welches das Bodenbehandlungswerkzeug oder den Behandlungsbereich darstellt, anzuzeigen, wobei das erste Objekt auf der Anzeigevorrichtung mithilfe der bestimmten Positionierungsdaten der Achse des Bodenbehandlungswerkzeugs und der geografischen Koordinaten des Behandlungsbereichs positioniert ist.

19. Anlage zur Behandlung eines Bodens, beinhaltend:
- eine Bodenbehandlungsmaschine, die ein Bodenbehandlungswerkzeug (12) umfasst, und
- eine Vorrichtung zur Unterstützung der Behandlung eines Bodens nach Anspruch 18.

20. Anlage zur Behandlung eines Bodens nach Anspruch 19, wobei die optische Erfassungsvorrichtung (14) auf der Bodenbehandlungsmaschine montiert ist.

## Claims

1. A soil treatment assistance method comprising the following steps:
- providing a machine (10) comprising a soil treatment tool (12) intended to be introduced into the soil;
- providing geographic coordinates of at least one treatment area (Zt1) associated with a soil treatment to be carried out;
- providing at least one optical acquisition device (14);
- determining positioning data (Y) of the soil treatment tool using the optical acquisition device;
- providing a display device (24);
- displaying on said display device at least a first object (O1, O1') representative of the soil treatment tool (12) or of said at least one treatment area; and
- positioning on the display device said first object using the previously determined positioning data of the soil treatment tool (12) and the geographic coordinates of said treatment area.

2. The soil treatment assistance method according to claim 1, wherein the position of the first object (O₁, O₁') on the display device (24) is updated in real time.

3. The soil treatment assistance method according to claim 1 or 2, wherein the positioning data (Y) of the soil treatment tool (12) comprise at least the geographic coordinates of said soil treatment tool.

4. The soil treatment assistance method according to any one of claims 1 to 3, wherein the step of determining the positioning data (Y) of the soil treatment tool (12) comprises a step of recognizing the shape of the soil treatment tool.

5. The soil treatment assistance method according to any one of claims 1 to 4, wherein the soil treatment tool (12) extends along an axis (A), wherein the positioning data (Y) of the soil treatment tool are positioning data of said axis of the soil treatment tool, and wherein the first object (O₁, O₁') is representative of the axis of the soil treatment tool.

6. The soil treatment assistance method according to any one of claims 1 to 5, comprising the step according to which positioning data (X) of the optical acquisition device (14) are provided and wherein the first object (O₁, O₁') is positioned on the display device (24) also using the positioning data of the optical acquisition device.

7. The soil treatment assistance method according to claim 6, wherein the optical acquisition device (14) is mounted on the machine (10), the method further comprising a step in which the positioning data (X) of the optical acquisition device are determined.

8. The soil treatment assistance method according to claim 6 or 7, wherein the positioning data (X) of the optical acquisition device (14) comprise the geographic coordinates, the orientation and/or the inclination of said optical acquisition device.

9. The soil treatment assistance method according to claim 8, wherein the geographic coordinates of the optical acquisition device (14) are determined using a geolocation member, for example a GPS system (18).

10. The soil treatment assistance method according to any one of claims 1 to 9, wherein at least a second object (O₂, O₂') representative of the soil treatment tool (12) is displayed on the display device (24) if the first object is representative of the treatment area (Zt1) or of the treatment area if the first object (O₁, O₁') is representative of the soil treatment tool.

11. The soil treatment assistance method according to claim 10, wherein a step of moving the soil treatment tool (12) parallel to the soil is performed, so as to position the object (O₁, O₂') representative of the soil treatment tool with respect to the object (O₂, O₁') representative of the treatment area (Zt1).

12. The soil treatment assistance method according to claim 10 or 11, wherein the display on the display device (24) is representative of a horizontal plane (P), the first object (O₁) being representative of the vertical projection of the soil treatment tool (12) in said horizontal plane and the second object (O₂) being representative of the vertical projection of the treatment area (Zt1) in said horizontal plane.

13. The soil treatment assistance method according to any one of claims 1 to 11, wherein the first object (O₁') is representative of the treatment area (Zt1) and wherein the next steps are further performed:
- providing at least one augmented reality device comprising said display device (24) and an image acquisition device;
- acquiring images using the image acquisition device (32) and displaying said images on the display device;
- determining positioning data (Z) of the image acquisition device;
- when the image acquisition device is oriented towards the treatment area (Zt1), embedding in the images displayed on the display device said first object (O₁') representative of the treatment area, said first object being positioned on the display device further using the positioning data of the image acquisition device, so that said first object representative of the treatment area coincides with the treatment area displayed on the display device.

14. The soil treatment assistance method according to any one of claims 1 to 13, wherein said at least one first object (O₁, O₁') presents a graphical representation which depends on the state of progress of the treatment.

15. The soil treatment assistance method according to any one of claims 1 to 14, wherein the distance between the soil treatment tool (12) and the treatment area (Zt1) is calculated using the first positioning data (Y) of the soil treatment tool and the geographic coordinates of the treatment area, and wherein said at least one first object (O₁, O₁') presents a graphical representation which is a function of said calculated distance.

16. The soil treatment assistance method according to any one of claims 1 to 15, wherein the soil treatment is a soil drilling, in which the soil treatment tool (12) is a drilling tool and wherein the treatment area (Zt1) is a drilling area.

17. The soil treatment assistance method according to claim 16, wherein the drilling tool is rotatable about an axis (A), wherein the step of determining the positioning data (Y) of the drilling tool is performed while the drilling tool is being rotated about said axis, and wherein the first object (O₁) is representative of the axis of the drilling tool.

18. A soil treatment assistance device (25), said soil comprising at least one treatment area (Zt1) associated with a treatment to be carried out on the soil, the device comprising:
- at least one optical acquisition device (14) configured to determine positioning data (Y) of the soil treatment tool (12); and
- a display device (24) configured to display at least a first object representative of the soil treatment tool or of said treatment area, said first object being positioned on the display device using the determined positioning data of said axis of the soil treatment tool and the geographic coordinates of said treatment area.

19. A soil treatment installation including:
- a soil treatment machine comprising a soil treatment tool (12); and
- a soil treatment assistance device (25) according to claim 18.

20. The soil treatment installation according to claim 19, wherein the optical acquisition device (14) is mounted on the soil treatment machine.
